# EUROPEAN PATENT APPLICATION

(11) **EP 4 823 072 A1**
(43) Date of publication of application: **14.10.2026**
(21) Application number: 26171697.1
(22) Date of filing: 10.04.2026
(51) Int. Cl.: H04L 67/12

(54) **SMART UNIVERSAL ADAPTOR FOR COMMUNICATION BETWEEN A CONTROL UNIT AND SMART LITHIUM ION BATTERIES**

(30) Priority: 11.04.2025 US 202563787373 P; 06.04.2026 US 202619640147
(71) Applicant: Vertiv Corporation, Westerville, OH 43082 (US)
(72) Inventor: BHAT, Chetana, Pune (IN); PANDEY, Mahendra, Pune (IN); RAO, Anand, Pune (IN)
(74) Representative: Beal, James Michael

(57) **Abstract**

A conversion system and method therefor are provided, the system including: battery management systems (BMSs), each utilizing a communication protocol, such as e.g., Modbus (RTU/TCP), CAN Bus, SMBus, BLE; a control unit utilizing a communication protocol different from that utilized by at least one of the BMSs, and a smart hardware adaptor operatively connected between the BMSs and the control unit. The adaptor stores a mapping table mapping data between each of the protocols of the BMSs and the protocol of the control unit, and is configured to receive signal(s) from the BMSs and reformat the signal(s) to the protocol of the control unit and to receive signal(s) from the control unit and reformat the signal(s) to a protocol of a corresponding one of the BMSs, according to the mapping table.

## Description

### CROSS-REFERENCE TO RELATED APPLICATION(S)

This Application claims the benefit of U.S. Provisional Application 63/787,373, filed April 11, 2025.

### BACKGROUND

### 1. Field

Example embodiments described herein relate to the field of power control units, and more particularly to a smart universal adaptor for communication between a control unit and smart lithium ion batteries.

### 2. Background

Power systems may use or rely on various power sources or power storage mechanisms. For example, a power system may use or rely on various batteries, such as lithium ion batteries. As such batteries come online, or are replaced, control units have to be updated, which increases time to market and/or increases memory size of firmware packets associated with the control unit. As such, support for such batteries in the market may be limited.

### SUMMARY

Example embodiments may address at least the above such drawbacks and/or disadvantages and other disadvantages not described above. Also example embodiments are not required to overcome the disadvantages described above, and may not overcome any of the problems described above.

### BRIEF DESCRIPTION OF THE DRAWINGS

The above and other objects, advantages, and salient features will become apparent to those skilled in the art from the following detailed description of example embodiments when taken in conjunction with the accompanying drawings in which:
FIG. 1 illustrates a power management system according to one or more example embodiments;
FIG. 2 illustrates an example user interface, according to one or more example embodiments;
FIG. 3 illustrates an alternative example user interface, according to one or more example embodiments;
FIG. 4 is a block diagram of a processor-based computer system, according to one or more example embodiments;
FIG. 5 an example user interface configured to map parameters from one or more protocols, according to one or more example embodiments;
FIG. 6 illustrates a processor-based computer system, according to one or more example embodiments;
FIG. 7 is a flow chart of an example mapping and conversion method, according to one or more example embodiments; and
FIG. 8 is a flow chart of another example mapping and conversion method, according to one or more example embodiments.

### DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.

It will be understood that the terms "include," "including", "comprise, and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," and/or other, may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Expressions of relational orientation, such as "upper," "lower," "inside," "outside," and/or other expressions, which are used for explaining the structural positions of various components as described herein, are not absolute but relative. The orientation expressions are appropriate when the various components are arranged as shown in the figures, but should change accordingly when the positions of the various components in the figures change.

Matters of these example embodiments that are obvious to those of ordinary skill in the technical field to which these example embodiments pertain may not be described here in detail.

As described, power systems may use or rely on any of various power sources or power storage mechanisms. For example, a power system may use or rely on any of various batteries, such as lithium ion (Li-ion) batteries. As such batteries come online, or are replaced, control units have to be updated, which increases time to market and/or increases memory size of firmware packets associated with the control unit. As such, support for such batteries in the market may be limited.

Related art Battery Management Systems (BMS) for lithium ion (Li-ion) batteries available in the market typically support different protocols, which are not standardized. For example, a control unit of a BMS, e.g. a battery management controller (BMC) may support a BMS including one or more Li-ion batteries and communication using a variant of a Modbus protocol. Modbus address maps differ for different types of Li-ion batteries, and other protocol address maps also differ, making it challenging to support all possible types of Li-ion batteries. Additionally, communication protocols used by Li-ion batteries and associated BMS may include, but are not limited to variants of Modbus (e.g. Remote Terminal Unit (RTU), Transport Control Protocol (TCP)), Controller Area Network (CAN) Bus, System Management Bus (CMBus), Bluetooth (BLE), and the like. As such, the support for Li-ion batteries is limited.

Accordingly, one or more example embodiments may provide systems and methods, such as those described herein, configured to provide a unique smart universal communication adapter that maps a data of a particular battery/BMS to a standard table, thus functioning as a universal communication adaptor between any of various protocols (e.g., Modbus (RTU/TCP), CAN Bus, SMBus, BLE), and a control unit utilizing a particular protocol Pcu.

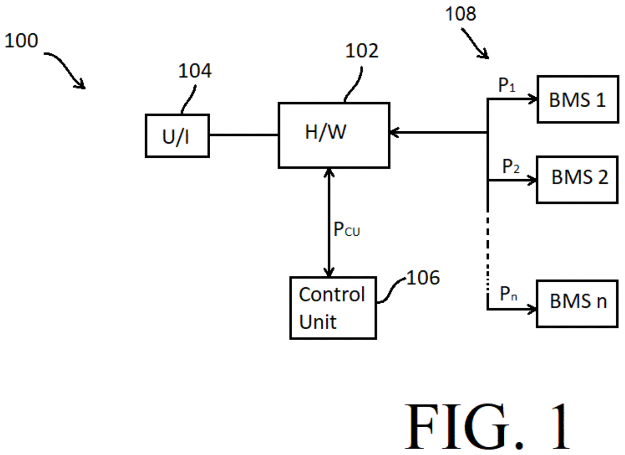

System: FIG. 1 schematically illustrates a system 100 that includes a smart hardware adaptor (H/W) 102, for example, a smart microcontroller-based adaptor, a power system 108, and a control unit 106. The power system includes one or more batteries, for example Li ion batteries (not shown), operationally connected to one or more BMS BMS1, BMS2, BMS3. The hardware adaptor is operationally connected between the one or more BMS and the control unit 106.

Each BMS BMS1, BMS2, ... BMSn may include one or more batteries, for example Li ion batteries, and at least one BMC which operates using a communication protocol P1, P2, ... Pn which may differ from the protocol utilized by the control unit 106, as well as from the communication protocol(s) utilized by other of the one or more BMS.

A user interface (U/I) 104 is operationally connected to the hardware adaptor and is configured to enable a user to interact with the hardware adaptor 102 to thereby configure the hardware adaptor 102 and to map one or more communication protocols P1, P2, ..Pn utilized by the one or more BMS, to a communication protocol P_{CU} utilized by the control unit 106. For example, the one or more BMS may respectively utilize one or more different protocols, and the communication protocol PCU utilized by the control unit 106 may be a specific Modbus variant. Accordingly, via the U/I 104, a user may configure the hardware adaptor 102 to map data and communication between, e.g. CAN, as utilized by a BMS 1 and a standard Modbus table of a control unit 106 as utilized by the control unit 106 using a unique BMS parameters-based mapping technique.

In order to preclude the need to update the firmware of the control unit 106 each time a new BMS is brought online, the hardware adaptor 102 is operationally connected between the control unit 106 and the one or more BMS.

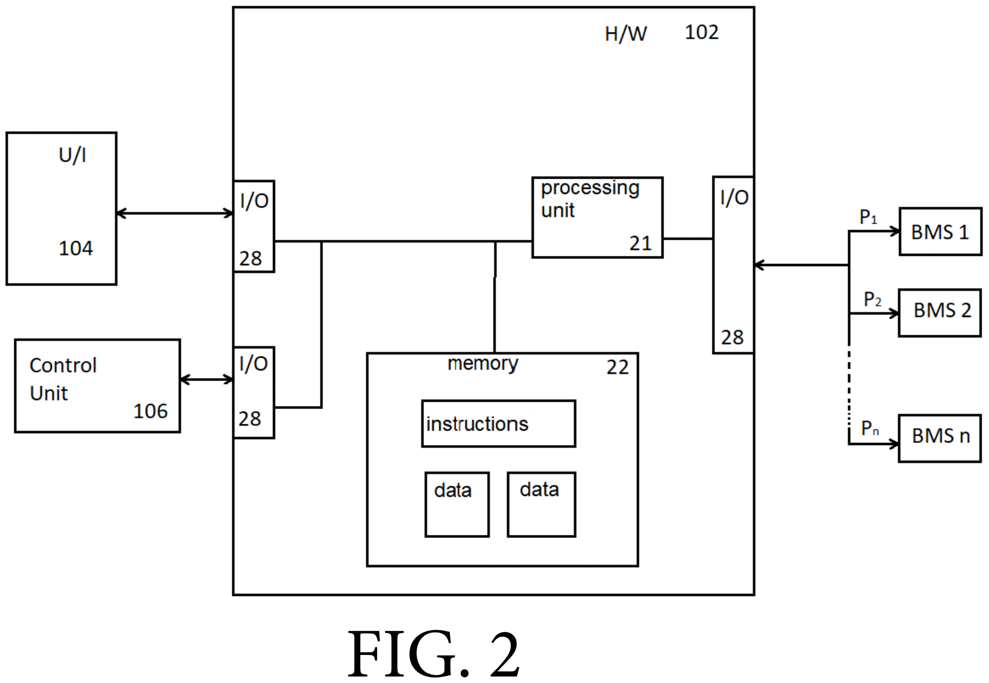

Hardware adaptor: FIG. 2 schematically illustrates a hardware adaptor 102 according to one or more example embodiments. As shown in FIG. 2, a hardware adaptor 102 may be a computer including a processing unit 21, a system memory 22, and a system bus (not shown). The system bus provides interconnections among the control system components. The processing unit 21 can be any of various available processors. Dual microprocessors and other multiprocessor architectures also can be employed as the processing unit 21.

The system bus can be any of several types of bus structures providing operative connections among the elements of the hardware adaptor 102 including, but not limited to, a memory bus or memory controller, a peripheral bus or external bus, and/or a local bus using any of a variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 22 may include volatile memory and nonvolatile memory. A basic input/output system (BIOS), containing basic routines to transfer information among elements of the hardware adaptor 102, such as during start-up, may be stored in nonvolatile memory. By way of non-limiting example, nonvolatile memory may include read only memory (ROM), programmable ROM (PROM), electrically programmable ROM (EPROM), electrically erasable programmable ROM (EEPROM), flash memory, or nonvolatile random access memory (RAM) (e.g., ferroelectric RAM (FeRAM). Volatile memory may include random access memory (RAM), which may act as an external cache memory. By way of non-limiting example, RAM is available in many forms such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM.

The hardware adaptor 102 may also include removable and/or non-removable, volatile and/or non-volatile computer storage media, for example, a disk storage. A disk storage may include, but is not limited to, a magnetic disk drive, floppy disk drive, tape drive, Jaz drive, Zip drive, LS-100 drive, flash memory card, and a memory stick. Disk storage also may include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices to a system bus, a removable or non-removable interface may be used.

The control system can be implemented, at least in part, in digital electronic circuitry, analog electronic circuitry, or in computer hardware, firmware, software, or a combination thereof. Accordingly, the hardware adaptor 102 may be implemented, at least in part as a computer program product such as a computer program, program code or computer instructions tangibly stored in the system memory 22 and executed by the processing unit 21. The hardware adaptor 102 may obtain information from the one or more BMS, via one or more input/output units (I/O) 28. The information may be stored as data, for example in the memory 22. A user may configure the hardware adaptor 102 and may map one or more protocols, such as used by the one or more BMS, to a protocol used by the control unit 106, via the U/I via one or more of the I/O 28. Thus, The system memory 22 may store, e.g. as data, one or more tables including parameters of one or more batteries corresponding to addresses of one or more protocol(s) utilized by the one or more BMS, and also corresponding to addresses of the protocol PCU utilized by the control unit 106.

Accordingly, based on information from the one or more BMS, and the one or more tables, the processing unit 21 may transmit and receive communication with the control unit 106 and with the one or more BMS in order to enable the control unit 106 to control the one or more BMS.

The one or more I/O 28 may be communicatively and operationally connected, either individually or in groups to the one or more BMS, to the control unit 106, and to the U/I 104, via wired or wireless connection. According to one or more example embodiments, of course, as would be understood by one of skill in the art, the hardware adaptor 102 may alternately be implemented, for example, as a computer program product such as a computer program, program code or computer instructions tangibly embodied in another type of information carrier, or in a machine-readable storage device, for execution by, or to control the operation of, another type of data processing apparatus such as a programmable processor, a computer, multiple computers, or a programmable logic controller (PLC).

A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or other device or on multiple device at one site or distributed across multiple sites and interconnected by a communication network. Also, functional programs, codes, and code segments for accomplishing features described herein can be easily developed by programmers skilled in the art. Operations associated with the example embodiments can be performed by one or more programmable processors executing a computer program, code or instructions to perform functions (e.g., by operating on input data and/or generating an output). Operations can also be performed by, and apparatuses described herein can be implemented as, special purpose logic circuitry, e.g., a field programmable gate array (FPGA) or an application-specific integrated circuit (ASIC), for example.

A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example, semiconductor memory devices, e.g., electrically programmable read-only memory (ROM) (EPROM), electrically erasable programmable ROM (EEPROM), flash memory devices, and data storage disks (e.g., magnetic disks, internal hard disks, or removable disks, magneto-optical disks, and CD-ROM and DVD-ROM disks). The processor and the memory can be supplemented by, or incorporated in special purpose logic circuitry.

Computer-readable non-transitory media includes all types of computer readable media, including magnetic storage media, optical storage media, flash media and solid state storage media. It should be understood that software can be installed in and sold with a central processing unit (CPU) device. Alternately, software can be obtained and loaded into the CPU device, including obtaining the software through physical medium or distribution system, including, for example, from a server owned by the software creator or from a server not owned but used by the software creator. The software can be stored on a server for distribution over the Internet, for example.

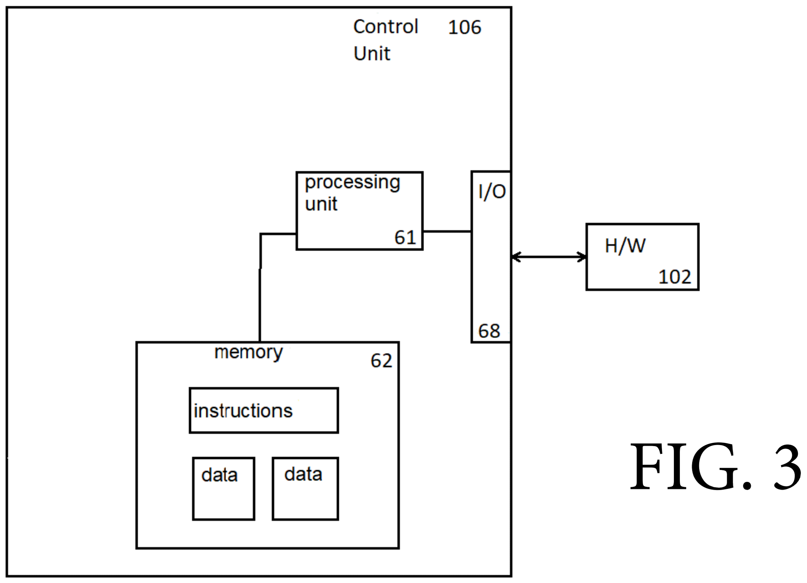

Control Unit: FIG. 3 schematically illustrates a control unit 106 according to one or more example embodiments. As shown in FIG. 3, a hardware adaptor 102 may be a computer including a processing unit 61, a system memory 62, and a system bus (not shown). The system bus provides interconnections among the control system components. The processing unit 61 can be any of various available processors. Dual microprocessors and other multiprocessor architectures also can be employed as the processing unit 61. A system memory 62 may include volatile memory and nonvolatile memory. A basic input/output system (BIOS), containing basic routines to transfer information among elements of the hardware adaptor 102, such as during start-up, may be stored in nonvolatile memory. The control unit 102 may be operationally connected to the hardware adaptor 102 via one or more input/output units (I/O) 68. The processing unit 61, memory 62, and one or more I/O units 68 of the control unit 102 may be analogous to those described hereinabove with respect to the hardware adaptor 102.

User Interface: The User Interface (U/I) 104 may include a display device presenting a graphical user interface GUI and a user input device. According to an example implementation, the display device may include a computer monitor or display screen on a tablet, smartphone, or a smart watch. The display device may include other hardware and/or software components such as a projector, virtual reality capability, augmented reality capability, etc. The display device may incorporate various different visual, audio, or other presentation technologies. The input device may include one or more devices such as, but not limited to, a keyboard, a mouse, a touch screen input, a gesture sensor, and/or a microphone and processor configured for voice recognition. The hardware adaptor 102 may control the display device to display a GUI.

The U/I 104 may be located on-site with the hardware adaptor 102 or may be a remote device that is communicatively coupled to enable a remote operator to communicate with the hardware adaptor 102.

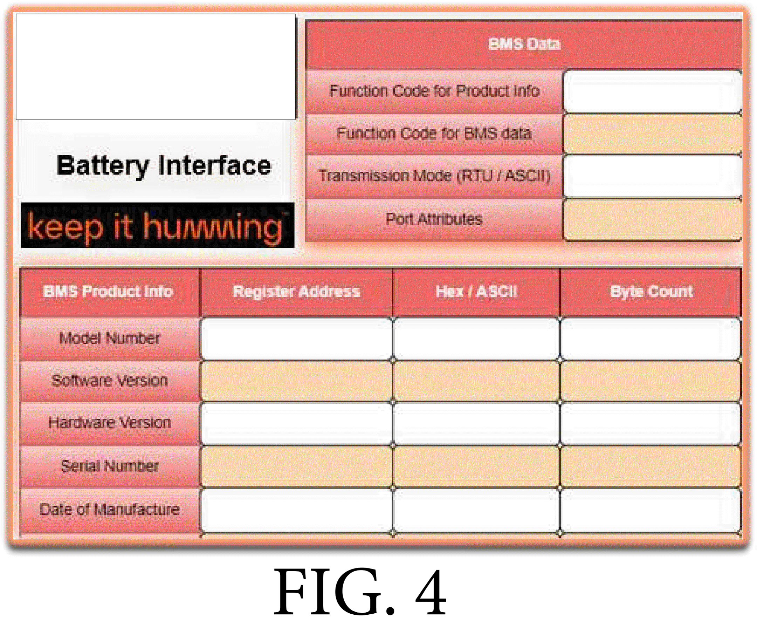

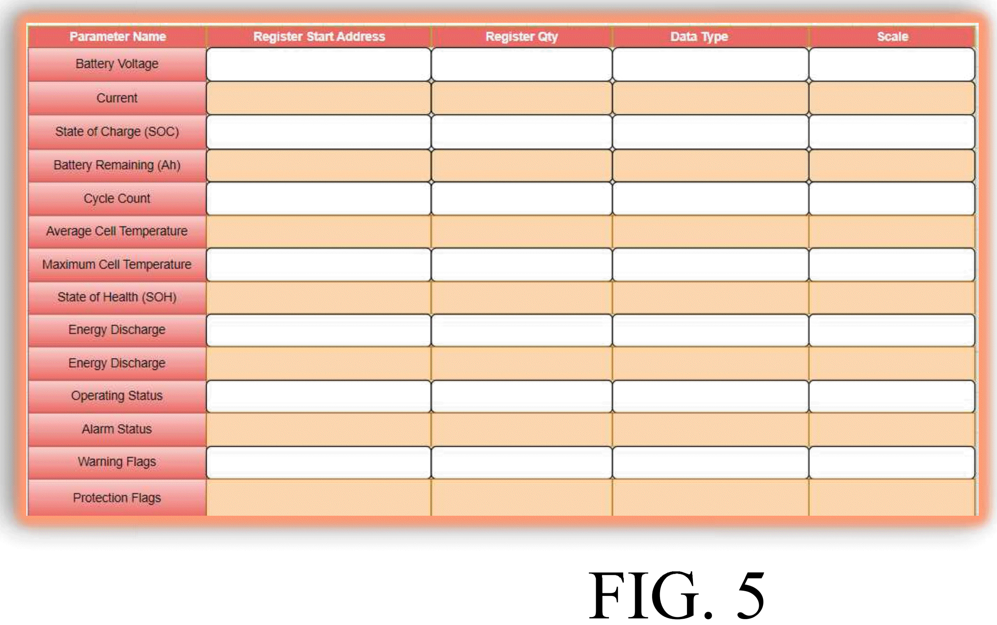

FIGS. 4 and 5 illustrate example GUIs configured to map parameters, e.g. voltage, current, and SOC, from one or more protocols which may be utilized by one or more BMS, with respect to a protocol utilized by the control unit 106. For example, parameters from a BMS 1, for example corresponding to a TCP, may be mapped to standard Modbus addresses corresponding to those parameters, as understood by the control unit 106.

Thus, the hardware adaptor 102 may act a unique communication link between control unit 106 and wider variety of Li-ion batteries (BMS) available in the market. The system 100 may be configured to allow for the mapping between any type of BMS protocol (e.g., Modbus (RTU/TCP), CAN Bus, SMBus, BLE, and/or the like) to a standard protocol of the control unit 106, which may provide a many to one communication mapping channel.

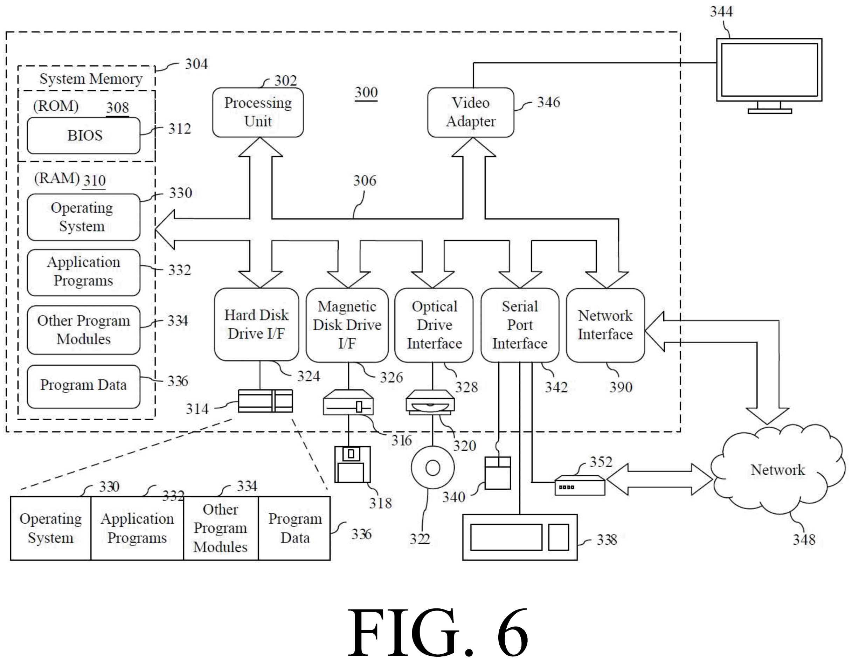

As shown in FIG. 6, processor-based computer system 300 includes one or more processors, referred to as processor circuit 302, a system memory 304, and a bus 306 that couples various system components including system memory 304 to processor circuit 302. The system 300 may be configured to implement some or all of the aspect of the systems and methods described herein. Processor circuit 302 is an electrical and/or optical circuit implemented in one or more physical hardware electrical circuit device elements and/or integrated circuit devices (semiconductor material chips or dies) as a central processing unit (CPU), a microcontroller, a microprocessor, and/or other physical hardware processor circuit. Processor circuit 302 may execute program code stored in a computer readable medium, such as program code of operating system 330, application programs 332, other programs 334, etc. Bus 306 represents one or more of any of several types of bus structures, including a memory bus or memory controller, a peripheral bus, an accelerated graphics port, and a processor or local bus using any of a variety of bus architectures. System memory 304 includes read only memory (ROM) 308 and random access memory (RAM) 310. A basic input/output system 312 (BIOS) is stored in ROM 308.

Processor-based computer system 300 also has one or more of the following drives: a hard disk drive 314 for reading from and writing to a hard disk, a magnetic disk drive 316 for reading from or writing to a removable magnetic disk 318, and an optical disk drive 320 for reading from or writing to a removable optical disk 322 such as a CD ROM, DVD ROM, or other optical media. Hard disk drive 314, magnetic disk drive 316, and optical disk drive 320 are connected to bus 306 by a hard disk drive interface 324, a magnetic disk drive interface 326, and an optical drive interface 328, respectively. The drives and their associated computer-readable media provide nonvolatile storage of computer-readable instructions, data structures, program modules and other data for the computer. Although a hard disk, a removable magnetic disk and a removable optical disk are described, other types of hardware-based computer-readable storage media can be used to store data, such as flash memory cards, digital video disks, RAMs, ROMs, and other hardware storage media.

A number of program modules may be stored on the hard disk, magnetic disk, optical disk, ROM, or RAM. These programs include operating system 330, one or more application programs 332, other programs 334, and program data 336. Application programs 332 or other programs 334 may include, for example, computer program logic (e.g., computer program code or instructions) for implementing the systems described above.

A user may enter commands and information into processor-based computer system 300 through input devices such as keyboard 338 and pointing device 340. Other input devices (not shown) may include a microphone, joystick, game pad, satellite dish, scanner, a touch screen and/or touch pad, a voice recognition system to receive voice input, a gesture recognition system to receive gesture input, or the like. These and other input devices are often connected to processor circuit 302 through a serial port interface 342 that is coupled to bus 306, but may be connected by other interfaces, such as a parallel port, game port, or a universal serial bus (USB).

A display screen 344 is also connected to bus 306 via an interface, such as a video adapter 346. Display screen 344 may be external to, or incorporated in processor-based computer system 300. Display screen 344 may display information, as well as being a user interface for receiving user commands and/or other information (e.g., by touch, finger gestures, virtual keyboard, etc.). In addition to display screen 344, processor-based computer system 300 may include other peripheral output devices (not shown) such as speakers and printers.

Processor-based computer system 300 is connected to a network 348 (e.g., the Internet) through an adaptor or network interface 350, a modem 352, or other means for establishing communications over the network. Modem 352, which may be internal or external, may be connected to bus 306 via serial port interface 342, as shown in FIG.3, or may be connected to bus 306 using another interface type, including a parallel interface.

As used herein, the terms "computer program medium," "computer-readable medium," and "computer-readable storage medium" are used to generally refer to physical hardware media such as the hard disk associated with hard disk drive 314, removable magnetic disk 318, removable optical disk 322, other physical hardware media such as RAMs, ROMs, flash memory cards, digital video disks, zip disks, MEMs, nanotechnology-based storage devices, and further types of physical/tangible hardware storage media (including system memory 304 of FIG. 4). Such computer-readable storage media are distinguished from and non-overlapping with communication media (do not include communication media). Communication media typically embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Embodiments are also directed to such communication media.

As noted above, computer programs and modules (including application programs 332 and other programs 334) may be stored on the hard disk, magnetic disk, optical disk, ROM, RAM, or other hardware storage medium. Such computer programs may also be received via network interface 350, serial port interface 342, or any other interface type. Such computer programs, when executed or loaded by an application, enable processor-based computer system 300 to implement features of embodiments discussed herein. Accordingly, such computer programs represent controllers of processor-based computer system 300.

Implementations of the systems, algorithms, methods, instructions, etc., described herein can be realized in hardware, software, or any combination thereof. The hardware can include, for example, computers, intellectual property (IP) cores, application-specific integrated circuits (ASICs), programmable logic arrays, optical processors, programmable logic controllers, microcode, microcontrollers, servers, microprocessors, digital signal processors, or any other suitable circuit. In the claims, the term "processor" should be understood as encompassing any of the foregoing hardware, either singly or in combination. The terms "signal" and "data" are used interchangeably.

As used herein, the term module can include a packaged functional hardware unit designed for use with other components, a set of instructions executable by a controller (e.g., a processor executing software or firmware), processing circuitry configured to perform a particular function, and a self-contained hardware or software component that interfaces with a larger system. For example, a module can include an application specific integrated circuit (ASIC), a Field Programmable Gate Array (FPGA), a circuit, digital logic circuit, an analog circuit, a combination of discrete circuits, gates, and other types of hardware or combination thereof. In other embodiments, a module can include memory that stores instructions executable by a controller to implement a feature of the module.

Further, in one aspect, for example, systems described herein can be implemented using a general-purpose computer or general-purpose processor with a computer program that, when executed, carries out any of the respective methods, algorithms, and/or instructions described herein. In addition, or alternatively, for example, a special purpose computer/processor can be utilized which can contain other hardware for carrying out any of the methods, algorithms, or instructions described herein.

Further, all or a portion of implementations of the present disclosure can take the form of a computer program product accessible from, for example, a computer-usable or computer-readable medium. A computer-usable or computer-readable medium can be any device that can, for example, tangibly contain, store, communicate, or transport the program for use by or in connection with any processor. The medium can be, for example, an electronic, magnetic, optical, electromagnetic, or a semiconductor device. Other suitable mediums are also available.

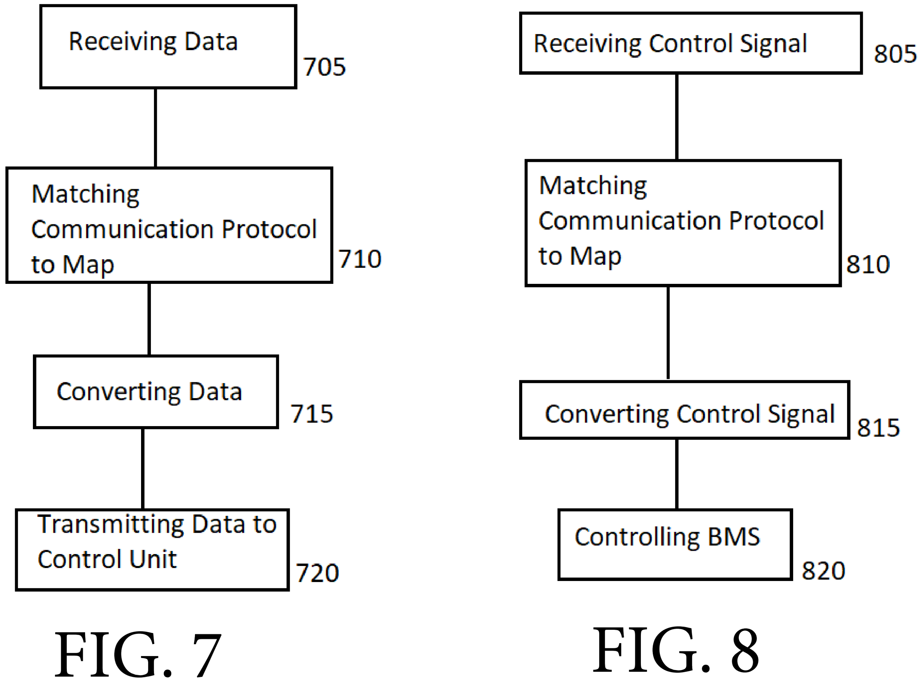

**Mapping and conversion operations:** FIG. 7 is a flow chart of an example mapping and conversion method according to one or more example embodiments. Operations of this method may be performed by a hardware adaptor according to one or more example embodiments. The method includes receiving data from a BMS (705); matching a communication protocol of the received data to a map stored in memory (710); converting the received data to a control unit communication protocol (715); and transmitting the converted data to a control unit (720).

Receiving the data from the BMS (705) may include receiving data of one or more parameters of a battery, where the parameters may include, for example, one or more of a battery voltage, a current, a SOC, a remaining battery, a cycle count, an average cell temperature, a maximum cell temperature, a state of health (SOH), an energy discharge, an operating status, an alarm status, warning flag(s), protection flag(s), and any of various other battery parameters as would be understood by one of skill in the art.

The matching the protocol of the received data (710) may include identifying a protocol corresponding to the received data. This may be performed by identifying a BMS from which the data is received and obtaining the protocol of the identified BMS based on data stored in memory. The identifying may also include identifying the protocol based on a format of the received data. The matching (710) may further include identifying, from one or more maps stored in memory, a map which corresponds to the identified protocol.

Conversion of the received data to a control unit protocol (715) may include using the identified map to convert received data from a format corresponding to the identified protocol of the BMS to a format corresponding to a protocol of the control unit using the map stored in memory.

Transmission of the converted data to a control unit (720) may include transmission of the converted data to the control unit utilizing the protocol of the control unit.

**Mapping and conversion operations:** FIG. 8 is a flow chart of another mapping and conversion method according to one or more example embodiments. Operations of this method may be performed by a hardware adaptor according to one or more example embodiments. The method includes receiving a control signal from a control unit (805); matching a communication protocol of the control signal to a communication protocol of a BMS (810); converting the control signal to a communication protocol of the BMS (815); and controlling the BMS (820).

Receiving the control signal (805) may include receiving a control signal from a control unit via a protocol of the control unit, where the control signal is for controlling a BMS.

Matching the protocol of the received control signal (810) may include identifying a protocol corresponding to a BMS to be controlled by the control signal. This may include identifying a BMS to be controlled by the control signal and identifying, for example from data stored in memory, a protocol corresponding to the identified BMS, and determining, from one or more maps stored in memory, a map corresponding to the identified protocol.

Conversion of the control signal to a protocol of the BMS (815) may include using the identified map to convert received data from a format corresponding to the identified protocol of the BMS to a format corresponding to a protocol of the control unit using the map stored in memory.

Controlling the BMS (820) may include transmitting the converted control signal to the identified BMS.

While aspects and implementation of example embodiments have been shown and described herein, it will be understood by those skilled in the art that various changes in form and details may be made therein.

It may be understood that example embodiments described herein may be considered in a descriptive sense only and not for purposes of limitation. Descriptions of features, aspects, or implementations within each example embodiment may be considered as available for other similar features, aspects, or implementations in other example embodiments.

The disclosure comprises the following items:
1. A battery management adaptor comprising:
   at least one memory storing thereon a mapping table mapping data between a plurality of battery management system (BMS) communication protocols and a control communication protocol different from each of the plurality of BMS communication protocols, and instructions; and
   at least one processor configured to perform a battery management conversion method comprising:
      receiving a signal from a BMS comprising at least one battery, the signal comprising an identification of the BMS according to a first BMS communication protocol;
      identifying the first BMS communication protocol;
      reformatting the signal and the identification of the BMS to the control communicaiton protocol based on the mapping table; and
      transmitting a reformatted signal to a control unit, the reformatted signal comprising an identification of the BMS formatted according to the control communication protocol.
2. The battery management adaptor according to item 1,
   wherein the signal comprises at least one of a plurality of parameters of the at least one battery of the BMS formatted according to the first BMS communication protocol; and
   wherein the method further comprises:
      reformatting the at least one of the plurality of parameters according to the control communication protocol according to the mapping table, wherein the reformatted signal further comprises the at least one of the plurality of paramters formatted according to the control communication protocol.
3. The battery management adaptor according to item 1 or item 2, wherein the plurality of paramerters comprise one or more of a battery voltage, a current, a state of charge, a battery remaining status, a cycle count, an average cell temperature, a maximum cell temperature, a state of health, an energy discharge, an operating statys, an alarm status, a warning flag, and a protection flag.
4. The battery management adaptor according to any preceding item, wherein the BMS is a first BMS, the signal is a first signal, and the reformatted signal is a reformatted first signal, and the method further comprises:
   receiving a second signal from a second BMS comprising at least one battery, the second signal comprising an identification of the second BMS according to a second BMS communication protocol, different from the first BMS communicaiton protocol;
   identifying the second BMS communicaiton protocol;
   reformatting the second signal and the identification of the second BMS to the control communication protocol based on the mapping table; and
   transmitting the reformatted second signal to the control unit, the reformatted second signal comprising an identification fo the seconde BMS formatted according to the control communication protocol.
5. The battery management adaptor according to any preceding item, wherein the method further comprises:
   receiving a control signal from the control unit, the control signal formatted according to the control communication protocol;
   converting the control signal to the first BMS communication protocol based on the mapping table; and
   transmitting, to the BMS, the control signal formatted according to the first BMS communication protocol.
6. A battery system comprising:
   a plurality of battery management systems (BMSs) configured to to utilize a respective plurality of BMS communication protocols, each of the plurality of BMS comprising at least one battery and a battery management controller (BMC);
   a control unit configured to control the plurality of BMSs, the control unit configured to utilize a control communication protocol different from each of the plurality of BMS communicaiton protocols; and
   a battery management adaptor operatively connected between the plurality of BMSs and the control unit, the battery management adaptor comprising:
      a memory storing thereon a mapping table mapping data between each of the BMS communication protocols and the control communicaiton protocol, and instructions, and
      at least one processor configured to perform a battery management conversion method comprising:
         receiving a signal from a BMS, the signal comprising an identification of the BMS according to a first BMS communication protocol;
         identifying the first BMS communication protocol;
         reformatting the signal and the identification of the BMS to the control communicaiton protocol based on the mapping table; and
         transmitting a reformatted signal to a control unit, the reformatted signal comprising an identification of the BMS formatted according to the control communication protocol.
7. The battery management system according to item 6,
   wherein the signal comprises at least one of a plurality of parameters of the at least one battery of the BMS formatted according to the first BMS communication protocol; and
   wherein the method further comprises:
      reformatting the at least one of the plurality of parameters according to the control communication protocol according to the mapping table, wherein the reformatted signal further comprises the at least one of the plurality of paramters formatted according to the control communication protocol.
8. The battery management system according to item 6 or item 7, wherein the plurality of paramerters comprise one or more of a battery voltage, a current, a state of charge, a battery remaining status, a cycle count, an average cell temperature, a maximum cell temperature, a state of health, an energy discharge, an operating statys, an alarm status, a warning flag, and a protection flag.
9. The battery management system according to any of items 6-8, wherein the BMS is a first BMS, the signal is a first signal, and the reformatted signal is a reformatted first signal, and the method further comprises:
   receiving a second signal from a second BMS comprising at least one battery, the second signal comprising an identification of the second BMS according to a second BMS communication protocol, different from the first BMS communicaiton protocol;
   identifying the second BMS communicaiton protocol;
   reformatting the second signal and the identification of the second BMS to the control communication protocol based on the mapping table; and
   transmitting the reformatted second signal to the control unit, the reformatted second signal comprising an identification fo the seconde BMS formatted according to the control communication protocol.
10. The battery management system according to any of items 6-10, wherein the method further comprises:
   receiving a control signal from the control unit, the control signal formatted according to the control communication protocol;
   converting the control signal to the first BMS communication protocol based on the mapping table; and
   transmitting, to the BMS, the control signal formatted according to the first BMS communication protocol.

## Claims

1. A battery management adaptor comprising:
at least one memory storing thereon a mapping table mapping data between a plurality of battery management system, "BMS", communication protocols and a control communication protocol different from each of the plurality of BMS communication protocols, and instructions; and
at least one processor configured to perform a battery management conversion method comprising:
receiving a signal from a BMS comprising at least one battery, the signal comprising an identification of the BMS according to a first BMS communication protocol;
identifying the first BMS communication protocol;
reformatting the signal and the identification of the BMS to the control communication protocol based on the mapping table; and
transmitting a reformatted signal to a control unit, the reformatted signal comprising an identification of the BMS formatted according to the control communication protocol.

2. The battery management adaptor according to claim 1,
wherein the signal comprises at least one of a plurality of parameters of the at least one battery of the BMS formatted according to the first BMS communication protocol; and
wherein the method further comprises:
reformatting the at least one of the plurality of parameters according to the control communication protocol according to the mapping table, wherein the reformatted signal further comprises the at least one of the plurality of paramters formatted according to the control communication protocol.

3. The battery management adaptor according to claim 1 or claim 2, wherein the plurality of parameters comprise one or more of a battery voltage, a current, a state of charge, a battery remaining status, a cycle count, an average cell temperature, a maximum cell temperature, a state of health, an energy discharge, an operating statys, an alarm status, a warning flag, and a protection flag.

4. The battery management adaptor according to any preceding claim, wherein the BMS is a first BMS, the signal is a first signal, and the reformatted signal is a reformatted first signal, and the method further comprises:
receiving a second signal from a second BMS comprising at least one battery, the second signal comprising an identification of the second BMS according to a second BMS communication protocol, different from the first BMS communicaiton protocol;
identifying the second BMS communicaiton protocol;
reformatting the second signal and the identification of the second BMS to the control communication protocol based on the mapping table; and
transmitting the reformatted second signal to the control unit, the reformatted second signal comprising an identification fo the seconde BMS formatted according to the control communication protocol.

5. The battery management adaptor according to any preceding claim, wherein the method further comprises:
receiving a control signal from the control unit, the control signal formatted according to the control communication protocol;
converting the control signal to the first BMS communication protocol based on the mapping table; and
transmitting, to the BMS, the control signal formatted according to the first BMS communication protocol.

6. A battery system comprising:
a plurality of battery management systems, "BMSs", configured to utilize a respective plurality of BMS communication protocols, each of the plurality of BMSs comprising at least one battery and a battery management controller, "BMC";
a control unit configured to control the plurality of BMSs, the control unit configured to utilize a control communication protocol different from each of the plurality of BMS communication protocols; and
a battery management adaptor according to any preceding claim, the battery management adaptor being operatively connected between the plurality of BMSs and the control unit.
